# EUROPEAN PATENT APPLICATION

(11) **EP 4 723 400 A1**
(43) Date of publication of application: **08.04.2026**
(21) Application number: 24810984.5
(22) Date of filing: 14.05.2024
(51) Int. Cl.: H01S 3/067, H01S 3/10

(54) **FIBER LASER DEVICE**

(30) Priority: 24.05.2023 JP 2023085797
(71) Applicant: Fujikura Ltd., Tokyo 135-8512 (JP)
(72) Inventor: SHIMA, Kensuke, Sakura-shi, Chiba 285-8550 (JP); NAGAOKA, Ryuji, Kobe-shi, Hyogo 650-8670 (JP)
(74) Representative: Hoffmann Eitle
(86) International application number: PCT/JP2024/017823
(87) International publication number: WO 2024/241977

(57) **Abstract**

A fiber laser device includes: a first amplification optical fiber (61); a first FBG (51) and a second FBG (52) sandwiching the first amplification optical fiber (61); a second amplification optical fiber (62) disposed on the opposite side of the second FBG (52) from the first amplification optical fiber (61); a first pumping light source (11) that introduces pumping light into the first amplification optical fiber from the side of the first FBG (51); and a second pumping light source (12) that introduces pumping light into the second amplification optical fiber (62) from the opposite side from the second FBG (52), in which the concentration of an active element added to the core of the second amplification optical fiber (62) is higher than the concentration of an active element added to the core of the first amplification optical fiber (61), and part of the pumping light from the first pumping light source (11) passes through the first amplification optical fiber (61) and propagates to the second amplification optical fiber (62).

## Description

### Technical Field

The present invention relates to a fiber laser device.

### Background Art

Fiber laser devices are used in various fields such as the laser processing field and the medical field. Patent Literature 1 mentioned below discloses an example of a fiber laser device. This fiber laser device includes a seed light source and an optical amplifier that is connected to the seed light source and amplifies light from the seed light source. The seed light source includes a resonator formed with a high-reflectivity mirror, a low-reflectivity mirror, and an amplification optical fiber disposed between the mirrors, and a pumping light source that introduces pumping light into the amplification optical fiber from the high-reflectivity mirror side. The optical amplifier includes an amplification optical fiber optically coupled to the seed light source, and a pumping light source that introduces pumping light into the amplification optical fiber from the opposite side from the seed light source side.

In this fiber laser device, light resonates between the high-reflectivity mirror and the low-reflectivity mirror, the light is amplified in the amplification optical fiber between the mirrors, and part of the amplified light is emitted from the seed light source. The emitted light enters the amplifier, is further amplified by the amplification optical fiber, and is emitted.

[Patent Literature 1] JP 2018-190834 A

### Summary of Invention

In such a fiber laser device, light propagating forward and light propagating backward exist in the resonator. Therefore, the power density of light is high, and there is a possibility that stimulated Raman scattering will occur. When stimulated Raman scattering occurs, there is a possibility that light of an unintended wavelength will be amplified, and the output will become unstable. Therefore, it is conceivable to prevent the occurrence of stimulated Raman scattering by shortening the amplification optical fiber in the resonator. However, there is a demand for fiber laser devices having higher output power, and therefore, it is preferable to prevent a decrease in output power. Because of this, when high-power pumping light enters the resonator, photo darkening might occur, which will lead to an increase in transmission loss of light in the core of the amplification optical fiber. Therefore, the present invention aims to provide a fiber laser device capable of preventing a decrease in output power while preventing the occurrence of stimulated Raman scattering and photo darkening.

To solve the above problem, a fiber laser device according to the present invention includes: a first amplification optical fiber including a core to which an active element is added, and a cladding; a first mirror that is optically coupled to the core of the first amplification optical fiber on one side of the first amplification optical fiber, and reflects light of a wavelength of at least part of light emitted from the active element that is pumped; a second mirror that is optically coupled to the core of the first amplification optical fiber on the other side of the first amplification optical fiber, and reflects light of a wavelength of at least part of light reflected by the first mirror with a lower reflectance than the first mirror; a second amplification optical fiber that is disposed on the opposite side of the second mirror from the first amplification optical fiber, and includes a core to which an active element is added and a cladding, the core being optically coupled to the second mirror, the cladding being optically coupled to the cladding of the first amplification optical fiber; a first pumping light source that introduces pumping light into the cladding of the first amplification optical fiber from the side of the first mirror; and a second pumping light source that introduces pumping light into the cladding of the second amplification optical fiber from the opposite side from the second mirror, in which the concentration of the active element added to the core of the second amplification optical fiber is higher than the concentration of the active element added to the core of the first amplification optical fiber, and part of the pumping light from the first pumping light source passes through the cladding of the first amplification optical fiber and propagates to the cladding of the second amplification optical fiber.

As described above, a site where stimulated Raman scattering is likely to occur is in a resonator. In this fiber laser device, the first mirror, the first amplification optical fiber, and the second mirror constitute a resonator. In this fiber laser device, however, part of the pumping light from the first pumping light source passes through the first amplification optical fiber. Accordingly, the power density of the light propagating through the core in the resonator is not too high compared with that in a case where all the pumping light from the first pumping light source is absorbed by the first amplification optical fiber, and thus, the occurrence of stimulated Raman scattering can be prevented. Meanwhile, the likelihood of occurrence of photo darkening is affected by the value obtained by dividing the concentration of the active element by the value obtained by dividing the power density of the light propagating through the core of the amplification optical fiber by the power density of the pumping light. For this reason, the higher the power of the pumping light from the first pumping light source, the more easily photo darkening occurs in the first amplification optical fiber. However, the concentration of the active element added to the core of the first amplification optical fiber of the fiber laser device is lower than the concentration of the active element added to the core of the second amplification optical fiber. Thus, compared with that in a case where the concentration of the active element added to the core of the first amplification optical fiber is as high as the concentration of the active element added to the core of the second amplification optical fiber, the occurrence of photo darkening in the first amplification optical fiber is more effectively prevented. Also, in this fiber laser device, part of the pumping light from the first pumping light source propagates to the second amplification optical fiber having an active element with a higher concentration than that of the first amplification optical fiber. Accordingly, the amplification factor of light in the second amplification optical fiber is higher than that in a case where the pumping light from the first pumping light source does not propagate to the second amplification optical fiber. Thus, the fiber laser device of the present invention can prevent a decrease in output power. As described above, with the fiber laser device according to the present invention, a decrease in output power can be prevented while the occurrence of stimulated Raman scattering and photo darkening is prevented.

Further, the concentration of the active element added to the core of the second amplification optical fiber is preferably twice or more and four times or less the concentration of the active element added to the core of the first amplification optical fiber.

Further, the first amplification optical fiber and the second amplification optical fiber preferably absorb 99% or more of the pumping light emitted from the first pumping light source and the second pumping light source.

With such a configuration, the power of the leaking pumping light is small, the light propagating through the core is efficiently amplified, and damage to the members due to the leaking pumping light can be reduced.

In this case, the second amplification optical fiber preferably absorbs 98% or more of the entering pumping light.

With such a configuration, the power of the pumping light emitted from the second amplification optical fiber is small, and it is possible to prevent the pumping light emitted from the second amplification optical fiber from propagating to the first amplification optical fiber and excessively amplifying the light propagating through the core in the first amplification optical fiber, and to prevent the occurrence of stimulated Raman scattering more effectively. Furthermore, the pumping light that passes through the first amplification optical fiber and enters the second amplification optical fiber can be efficiently used.

Also, 33% or more and 66% or less of the pumping light from the first pumping light source preferably propagates to the second amplification optical fiber.

With such a configuration, the light propagating through the cores of the first amplification optical fiber and the second amplification optical fiber can be stably amplified, while the occurrence of stimulated Raman scattering in the first amplification optical fiber is prevented.

Further, the power of the pumping light emitted from the first pumping light source and the power of the pumping light emitted from the second pumping light source are preferably almost equal to each other.

With such a configuration, pumping light having the highest possible power can be introduced into the first and second amplification optical fibers, and high-power light can be emitted from the fiber laser device.

Also, the diameter of the core of the first amplification optical fiber and the diameter of the core of the second amplification optical fiber may be substantially the same.

As described above, according to the present invention, a fiber laser device capable of preventing a decrease in output power while preventing the occurrence of stimulated Raman scattering and photo darkening is provided.

### Brief Description of Drawings

[FIG. 1] FIG. 1 is a diagram illustrating a fiber laser device according to an embodiment of the present invention.
[FIG. 2] FIG. 2 is a diagram illustrating a state of a cross-section perpendicular to the longitudinal direction of an amplification optical fiber.

### Description of Embodiments

The following is a detailed description of a preferred embodiment of a fiber laser device according to the present invention, with reference to the drawings. The embodiment described below is intended to facilitate understanding of the present invention, and is not intended to limit the present invention. The present invention can be changed or modified without departing from the scope of claims. Note that, to facilitate understanding, scales in the respective drawings may be different from scales described in the following description.

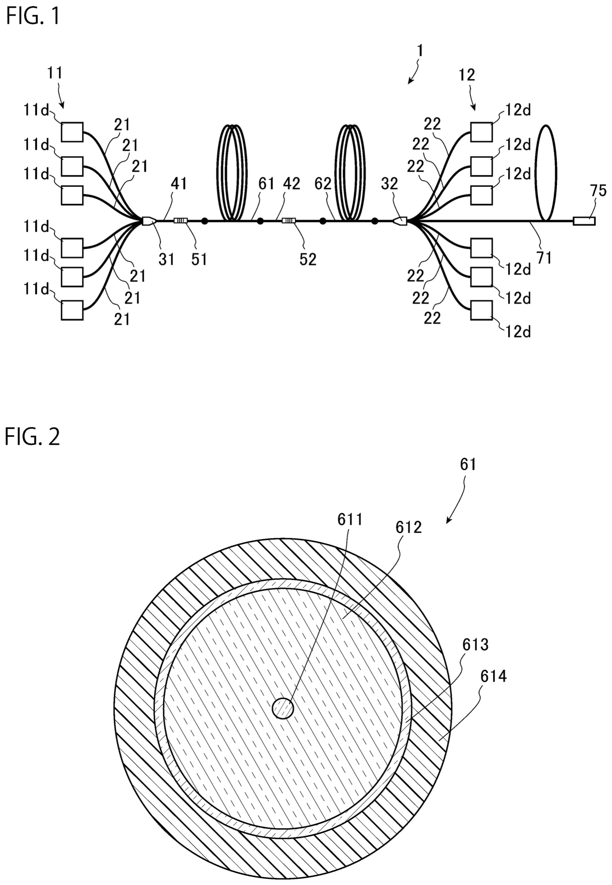

FIG. 1 is a diagram illustrating a laser device according to the present embodiment. As illustrated in FIG. 1, a fiber laser device 1 according to the present embodiment includes principal components that are a first pumping light source 11 and a second pumping light source 12, a first fiber Bragg grating (FBG) 51 as a first mirror and a second FBG 52 as a second mirror, and a first amplification optical fiber 61 and a second amplification optical fiber 62.

The first pumping light source 11 includes a plurality of laser diodes 11d, and emits pumping light having a wavelength that pumps an active element added to each of the first amplification optical fiber 61 and the second amplification optical fiber 62 described later. In a case where the active element added to the first amplification optical fiber 61 and the second amplification optical fiber 62 is ytterbium (Yb) as described later, the wavelength of the pumping light is 976 nm, for example. Note that the first pumping light source 11 is connected to a predetermined power supply, and emits pumping light having power corresponding to the electric current supplied from the power supply. It is preferable that the power supply can vary the electric current to be output. Each laser diode 11d of the first pumping light source 11 is connected to one end of a pumping-light optical fiber 21. A pumping-light optical fiber 21 is an optical fiber having a core of 125 µm in diameter, for example. The other end of each pumping-light optical fiber 21 is connected to a pumping light combiner 31.

One end of an optical fiber 41 to be described later is connected to the pumping light combiner 31, and one end of the first amplification optical fiber 61 is connected to the other end of the optical fiber 41.

FIG. 2 is a diagram illustrating a state of a cross-section of the first amplification optical fiber 61 illustrated in FIG. 1. As illustrated in FIG. 2, the first amplification optical fiber 61 includes principal components that are a core 611, an inner cladding 612 surrounding the outer peripheral surface of the core 611 without any space, an outer cladding 613 covering the outer peripheral surface of the inner cladding 612, and a covering layer 614 covering the outer cladding 613. That is, the first amplification optical fiber 61 is a double-clad optical fiber from a structural point of view. The refractive index of the inner cladding 612 is lower than the refractive index of the core 611, and the refractive index of the outer cladding 613 is lower than the refractive index of the inner cladding 612. The diameter of the core 611 is 28 µm, for example, and the outer diameter of the inner cladding 612 is 400 µm, for example. In the present embodiment, the first amplification optical fiber 61 is a multimode optical fiber from an optical point of view, and light of 4LP mode, for example, propagates through the core 611. Further, the length of the first amplification optical fiber 61 is 20 m, for example. Note that the core 611 may be a component through which light of 2LP mode or greater and 10LP mode or smaller can propagate, for example. Note that pumping light propagates in the inner cladding 612 as described later, and such an inner cladding in which pumping light propagates is simply referred to as a cladding in some cases.

An active element to be pumped by pumping light emitted from the first pumping light source 11 is added to the core 611. In the present embodiment, ytterbium is added as the active element. Note that, to enhance resistance to photo darkening, aluminum and phosphorus are preferably further added to the core 611. Furthermore, to adjust refractive index, a dopant such as fluorine (F) or boron (B) may be added to at least part of the core 611. Although different from the present embodiment, the active element added to the core 611 may be an active element other than ytterbium. Examples of such an active element include thulium (Tm), cerium (Ce), neodymium (Nd), europium (Eu), and erbium (Er), in addition to ytterbium. Further, examples of the active element include bismuth (Bi), in addition to rare-earth elements.

Further, the inner cladding 612 is formed with pure quartz to which any dopant is not added, or quartz to which a dopant for lowering the refractive index, such as fluorine, is added, for example. Meanwhile, the outer cladding 613 is formed with a resin having a lower refractive index than that of the inner cladding 612, or quartz to which an element that lowers the refractive index, such as fluorine, is added, for example. The covering layer 614 is formed with a thermosetting or ultraviolet-curing resin, and, in a case where the outer cladding 613 is formed with a resin, the covering layer 614 is formed with a different resin from the resin of the outer cladding 613.

The optical fiber 41 connected to one end of the first amplification optical fiber 61 has the same configuration as the first amplification optical fiber 61, except that any active element is not added to the core. Accordingly, the optical fiber 41 is a double-clad optical fiber from a structural point of view, and is a multimode optical fiber from an optical point of view. The core 611 of the first amplification optical fiber 61 and the core of the optical fiber 41 are optically coupled, and the inner cladding 612 of the first amplification optical fiber 61 and the inner cladding of the optical fiber 41 are optically coupled.

The first FBG 51, which is the first mirror, is provided on the core of the optical fiber 41. In this manner, the first FBG 51 is provided on one end side of the first amplification optical fiber 61, and is optically coupled to the core 611. The first FBG 51 is formed with portions that have a high refractive index and appear at constant intervals in the longitudinal direction of the optical fiber 41. As the intervals are adjusted, the first FBG 51 reflects light having at least one of the wavelengths of light emitted from the pumped active element of the first amplification optical fiber 61. In a case where the active element added to the first amplification optical fiber 61 is ytterbium as described above, the first FBG 51 reflects light having a wavelength of 1070 nm ±3 nm with a reflectance of 99% or higher, for example.

The pumping light combiner 31 is connected to the cores of the respective pumping-light optical fibers 21, and optically couples the cores of the respective pumping-light optical fibers 21 and the inner cladding of the optical fiber 41. Accordingly, pumping light emitted from the first pumping light source 11 can propagate to the inner cladding 612 of the first amplification optical fiber 61 via the pumping-light optical fibers 21, the pumping light combiner 31, and the optical fiber 41. In view of this, the first pumping light source 11 is a light source that introduces pumping light into the inner cladding 612 of the first amplification optical fiber 61 from the side of the first FBG 51.

One end of an optical fiber 42 is connected to the other end of the first amplification optical fiber 61. The optical fiber 42 has the same configuration as the optical fiber 41. Accordingly, the optical fiber 42 is a double-clad optical fiber from a structural point of view, and is a multimode optical fiber from an optical point of view. The core 611 of the first amplification optical fiber 61 and the core of the optical fiber 42 are optically coupled, and the inner cladding 612 of the first amplification optical fiber 61 and the inner cladding of the optical fiber 42 are optically coupled.

The second FBG 52, which is the second mirror, is provided on the core of the optical fiber 42. In this manner, the second FBG 52 is provided on the other end side of the first amplification optical fiber 61, and is optically coupled to the core 611. The second FBG 52 is designed so that portions having a high refractive index appear at constant intervals in the longitudinal direction of the optical fiber 42, and light of the wavelength of at least part of the light reflected by the first FBG 51 is reflected with a lower reflectance than the first FBG 51. The second FBG 52 is designed to reflect light of the same wavelength as the light to be reflected by the first FBG 51, for example, with a reflectance of 10%, for example. In this manner, a resonator is formed with the first FBG 51, the first amplification optical fiber 61, and the second FBG 52. Part of the light to be resonated by the resonator passes through the second FBG 52.

One end of the second amplification optical fiber 62 is connected to the other end of the optical fiber 42. The second amplification optical fiber 62 has the same configuration as the first amplification optical fiber 61, except for the concentration of the active element added to the core described later. Accordingly, the second amplification optical fiber 62 is a double-clad optical fiber from a structural point of view, and is a multimode optical fiber from an optical point of view. Further, in the present embodiment, the diameter of the core of the second amplification optical fiber 62 and the outer diameter of the inner cladding are equal to the diameter of the core 611 of the first amplification optical fiber 61 and the outer diameter of the inner cladding 612, and the length of the second amplification optical fiber 62 is equal to the length of the first amplification optical fiber 61. The core of the optical fiber 42 and the core of the second amplification optical fiber 62 are optically coupled, and the inner cladding of the optical fiber 42 and the inner cladding of the second amplification optical fiber 62 are optically coupled. Accordingly, the core of the second amplification optical fiber 62 is optically coupled to the second FBG 52, and light transmitted through the second FBG 52 propagates to the core of the second amplification optical fiber 62. Furthermore, the inner cladding 612 of the first amplification optical fiber 61 and the inner cladding of the second amplification optical fiber 62 are optically coupled via the inner cladding of the optical fiber 42, and therefore, in a case where light is emitted from the inner cladding 612 of the first amplification optical fiber 61, the light enters the inner cladding of the second amplification optical fiber 62.

The second pumping light source 12 is a light source that introduces pumping light into the inner cladding of the second amplification optical fiber 62 from the opposite side from the side of the second FBG 52. The second pumping light source 12 is formed with a plurality of laser diodes 12d having the same configuration as that of the plurality of laser diodes 11d of the first pumping light source 11, and emits the same light as that from the first pumping light source 11. Accordingly, the power of the pumping light emitted from the first pumping light source 11 is substantially equal to the power of the pumping light emitted from the second pumping light source 12. Further, the light emitted from the second pumping light source 12 has a wavelength substantially equal to the wavelength of the pumping light emitted from the first pumping light source 11, and pumps the active element added to the second amplification optical fiber 62. Note that the second pumping light source 12 is connected to the same power source as the power source connected to the first pumping light source 11. Each laser diode 12d of the second pumping light source 12 is connected to one end of a pumping-light optical fiber 22 that has the same configuration as the pumping-light optical fiber 21. The other end of each pumping-light optical fiber 22 is connected to a pumping light combiner 32.

The other end of the second amplification optical fiber 62 is connected to the pumping light combiner 32, which optically couples the cores of the respective pumping-light optical fibers 22 and the inner cladding of the second amplification optical fiber 62. Accordingly, pumping light emitted from the second pumping light source 12 can propagate to the inner cladding of the second amplification optical fiber 62 via the pumping-light optical fibers 22 and the pumping light combiner 32.

One end of a delivery optical fiber 71 is connected to the pumping light combiner 32. The delivery optical fiber 71 has a core and a cladding, and the core and the cladding have the same diameters as the core and the inner cladding of the second amplification optical fiber 62, for example. The core of the delivery optical fiber is optically coupled to the core of the second amplification optical fiber 62 via the pumping light combiner 32. Further, an emission unit 75 is connected to the other end of the delivery optical fiber 71. The emission unit 75 is formed with a glass rod having a larger diameter than that of the core of the delivery optical fiber 71, for example. Accordingly, the diameter of light that enters the emission unit 75 from the core of the delivery optical fiber 71 is widened, and the light is emitted from the emission unit 75.

Next, the concentrations of the active elements added to the cores of the first amplification optical fiber 61 and the second amplification optical fiber 62 are described.

The first amplification optical fiber 61 is designed so that part of pumping light entering the inner cladding 612 of the first amplification optical fiber 61 is absorbed by the active element added to the core 611, and the remaining part of the pumping light is emitted from the first amplification optical fiber 61. The concentration of the active element added to the core 611 of the first amplification optical fiber 61 and the length of the first amplification optical fiber 61 are adjusted so that the pumping light is absorbed in this manner. The pumping light emitted from the first amplification optical fiber 61 enters the second amplification optical fiber 62 via the optical fiber 42.

Also, the first amplification optical fiber 61 is preferably designed so that 33% or more and 66% or less of the pumping light entering the first amplification optical fiber 61 is emitted. With this configuration, it is possible to efficiently amplify light propagating through the core 611 while preventing the occurrence of stimulated Raman scattering in the first amplification optical fiber 61. In this case, 33% or more and 66% or less of the pumping light enters the second amplification optical fiber 62. Further, the first amplification optical fiber 61 is more preferably designed so that approximately 50% of the pumping light entering the first amplification optical fiber 61 is emitted, and, in this case, approximately 50% of the pumping light enters the second amplification optical fiber 62.

Note that, in the present embodiment, 99% or more of the pumping light emitted from the first pumping light source 11 and the second pumping light source 12 is absorbed by the first amplification optical fiber 61 and the second amplification optical fiber 62. Therefore, the power of the leaking pumping light is small, the light propagating through the core is efficiently amplified, and damage to the members due to the leaking pumping light can be reduced.

Further, the concentration of the active element added to the core of the second amplification optical fiber 62 is higher than the concentration of the active element added to the core 611 of the first amplification optical fiber 61. Specifically, the concentration of the active element added to the core of the second amplification optical fiber 62 is preferably twice or more and four times or less, or more preferably, approximately three times the concentration of the active element added to the core 611. Therefore, the second amplification optical fiber 62 has a configuration capable of absorbing more pumping light than the first amplification optical fiber 61, and, in the present embodiment, the second amplification optical fiber 62 is designed so that most of the pumping light entering the inner cladding of the second amplification optical fiber 62 is absorbed by the second amplification optical fiber 62. Specifically, the second amplification optical fiber 62 preferably absorbs 98% or more, or more preferably, 99% or more of the entering pumping light. As the second amplification optical fiber 62 absorbs most of the entering pumping light in this manner, the power of the pumping light emitted from the second amplification optical fiber 62 is small. Accordingly, it is possible to prevent the pumping light emitted from the second amplification optical fiber 62 from propagating to the first amplification optical fiber 61 and excessively amplifying the light propagating through the core 611 in the first amplification optical fiber 61, and to prevent the occurrence of stimulated Raman scattering more effectively.

Next, operations of the fiber laser device 1 are described.

First, pumping light is emitted from each laser diode 11d of the first pumping light source 11 and each laser diode 12d of the second pumping light source 12. The pumping light emitted from the first pumping light source 11 enters the inner cladding 612 from one end of the first amplification optical fiber 61 via the pumping-light optical fibers 21, the pumping light combiner 31, and the optical fiber 41, and propagates mainly through the inner cladding 612. Part of the pumping light propagating through the inner cladding 612 is absorbed by the active element added to the core 611 while passing through the core 611, and pumps the active element. The active element in the pumped state emits spontaneous emission light in a wavelength band including a predetermined wavelength. With this spontaneous emission light as a starting point, light including the predetermined wavelength reflected by both the first FBG 51 and the second FBG 52 resonates between the first FBG 51 and the second FBG 52. When the resonant light propagates through the core 611 of the first amplification optical fiber 61, the pumped active element causes stimulated emission, and the resonant light is amplified. Part of the resonant light passes through the second FBG 52. When the gain and the loss in the resonator including the first FBG 51, the first amplification optical fiber 61, and the second FBG 52 become equal to each other, a laser oscillation state appears, and light having a certain power enters the core of the second amplification optical fiber 62.

Meanwhile, the remaining part of the pumping light entering the first amplification optical fiber 61 and propagating through the inner cladding 612 is not absorbed by the first amplification optical fiber 61, is emitted from the other end of the first amplification optical fiber 61, enters the inner cladding of the second amplification optical fiber 62 from one end of the second amplification optical fiber 62 via the inner cladding of the optical fiber 42, and propagates mainly through the inner cladding. Further, the pumping light emitted from the second pumping light source 12 enters the inner cladding of the second amplification optical fiber 62 from the other end of the second amplification optical fiber 62 via the pumping-light optical fibers 22 and the pumping light combiner 32, and propagates mainly through the inner cladding in the opposite direction from the traveling direction of the pumping light entering from the first amplification optical fiber 61. The pumping light propagating through the second amplification optical fiber 62 is absorbed by the active element added to the core of the second amplification optical fiber. As described above, in the present embodiment, most of the pumping light entering the inner cladding of the second amplification optical fiber 62 is absorbed by the active element added to the core of the second amplification optical fiber 62. As a result, the active element is pumped, the active element causes stimulated emission of light propagating from the core 611 of the first amplification optical fiber to the core of the second amplification optical fiber 62, and the light propagating through the core is amplified.

The light amplified by the second amplification optical fiber 62 enters the core of the delivery optical fiber 71 from the second amplification optical fiber 62, propagates from the core to the emission unit 75, is widened in diameter at the emission unit 75, and is emitted from the emission unit 75.

As described above, in the fiber laser device 1 of the present embodiment, the concentration of the active element added to the core of the second amplification optical fiber 62 is higher than the concentration of the active element added to the core 611 of the first amplification optical fiber 61, and part of pumping light from the first pumping light source 11 passes through the first amplification optical fiber 61 and propagates to the second amplification optical fiber 62. In this manner, in the fiber laser device 1 of the present embodiment, part of the pumping light from the first pumping light source 11 passes through the first amplification optical fiber 61. Accordingly, the power density of the light propagating through the core in the resonator is not too high compared with that in a case where all the pumping light from the first pumping light source 11 is absorbed by the first amplification optical fiber 61, and thus, the occurrence of stimulated Raman scattering can be prevented.

Also, as described above, when the output power of the fiber laser device increases, photo darkening might occur, and the likelihood of occurrence of photo darkening is affected by the value obtained by dividing the concentration of the active element by the value obtained by dividing the power density of the light propagating through the core of the amplification optical fiber by the power density of the pumping light. Therefore, the higher the concentration of the active element added to the core, the more easily photo darkening occurs, and, the higher the power density of the pumping light with respect to the power density of the light propagating through the core, the more easily photo darkening occurs. In the fiber laser device 1 of the present embodiment, on one end side that is the side of the first pumping light source 11 in the first amplification optical fiber 61, the power density of the light propagating through the core 611 is low, and the power density of the pumping light propagating through the inner cladding 612 is high. Therefore, in the first amplification optical fiber 61, photo darkening is most likely to occur on the one end side. However, the concentration of the active element added to the core 611 of the first amplification optical fiber 61 is lower than the concentration of the active element added to the core of the second amplification optical fiber 62. Thus, compared with that in a case where the concentration of the active element added to the core 611 of the first amplification optical fiber 61 is as high as the concentration of the active element added to the core of the second amplification optical fiber 62, the occurrence of photo darkening in the first amplification optical fiber 61 is more effectively prevented.

Also, in the fiber laser device 1 of the present embodiment, part of the pumping light from the first pumping light source 11 that passes through the first amplification optical fiber 61 enters the second amplification optical fiber. Since the concentration of the active element of the second amplification optical fiber 62 is higher than the concentration in the first amplification optical fiber 61, the pumping light from the first pumping light source 11 is efficiently absorbed in the second amplification optical fiber 62, and is used for amplification of the light propagating through the core. Thus, in the fiber laser device of the present embodiment, a decrease in output is prevented.

Note that the concentration of the active element added to the core of the second amplification optical fiber 62 is higher than the concentration of the active element added to the core 611 of the first amplification optical fiber 61. However, on the one end side that is the side of the first amplification optical fiber 61 in the second amplification optical fiber 62, the power density of the pumping light propagating from the first pumping light source is low as part of the pumping light is absorbed by the first amplification optical fiber 61, and the power density of the pumping light from the second pumping light source is low as part of the pumping light is absorbed by the second amplification optical fiber 62. Accordingly, the occurrence of photo darkening on the one end side of the second amplification optical fiber 62 is prevented. Meanwhile, on the other end side of the second amplification optical fiber, the light propagating through the core is amplified, and the power density of the light is high. Accordingly, the occurrence of photo darkening is also prevented on the other end side of the second amplification optical fiber 62. In this manner, in the fiber laser device 1 of the present embodiment, the occurrence of photo darkening is prevented.

Note that, in a case where the power of the pumping light emitted from the first pumping light source 11 and the power of the pumping light emitted from the second pumping light source are substantially equal to each other, and the second amplification optical fiber 62 absorbs 99% or more of the entering pumping light as described above, the concentration of the active element added to the core of the second amplification optical fiber 62 is preferably twice or more and four times or less the concentration of the active element added to the core 611 of the first amplification optical fiber 61, and the pumping light from the first pumping light source 11 that is emitted from the first amplification optical fiber 61 and enters the second amplification optical fiber 62 is preferably 33% or more and 66% or less. With such a balance, it is possible to further increase the power of the fiber laser device 1 while more effectively preventing the occurrence of photo darkening. Further, to prevent the occurrence of photo darkening more effectively, the concentration of the active element added to the core of the second amplification optical fiber 62 is preferably about three times the concentration of the active element added to the core 611 of the first amplification optical fiber 61, and the pumping light from the first pumping light source 11 that is emitted from the first amplification optical fiber 61 and enters the second amplification optical fiber 62 is preferably about 50%.

Although the present invention has been described with the embodiment taken as an example, the present invention is not to be construed as being limited to the above embodiment, and the configuration can be changed as appropriate within the scope of achieving the objective of the present invention.

For example, the concentration of the active element added to the core of the second amplification optical fiber 62 is not necessarily twice or more and four times or less the concentration of the active element added to the core 611 of the first amplification optical fiber 61, as long as it is higher than the concentration of the active element added to the core 611.

Also, the first amplification optical fiber 61 and the second amplification optical fiber 62 may absorb the pumping light with an efficiency lower than 99% of the pumping light emitted from the first pumping light source 11 and the second pumping light source 12. However, to efficiently emit high-power light, the first amplification optical fiber 61 and the second amplification optical fiber 62 preferably absorb 99% or more of the pumping light.

Also, the second amplification optical fiber 62 may absorb the entering pumping light with an efficiency lower than 98%. For example, the second amplification optical fiber 62 may absorb 97% of the entering pumping light, and, in this case, approximately 3% of the pumping light from the second pumping light source 12 is emitted from the second amplification optical fiber 62 and is made to enter the first amplification optical fiber 61.

Further, as long as part of the pumping light from the first pumping light source 11 propagates to the second amplification optical fiber 62, pumping light having a lower power than 33% or pumping light having a higher power than 66% of the pumping light from the first pumping light source 11 may propagate to the second amplification optical fiber 62.

Also, the power of the pumping light emitted from the first pumping light source 11 and the power of the pumping light emitted from the second pumping light source 12 may differ from each other. However, to introduce pumping light having the highest possible power into the amplification optical fiber, and cause the fiber laser device 1 to emit high-power light, the power of the pumping light emitted from the first pumping light source 11 and the power of the pumping light emitted from the second pumping light source 12 are preferably equal to each other.

Further, the diameter of the core 611 of the first amplification optical fiber 61 and the diameter of the core of the second amplification optical fiber 62 may differ from each other, and the outer diameter of the inner cladding 612 of the first amplification optical fiber 61 and the outer diameter of the inner cladding 612 of the second amplification optical fiber 62 may differ from each other. In this case, for the light emitted from the core 611 of the first amplification optical fiber 61 to efficiently enter the core of the second amplification optical fiber 62, the diameter of the core of the second amplification optical fiber 62 is preferably larger than the diameter of the core 611 of the first amplification optical fiber 61. Also, for the light emitted from the inner cladding 612 of the first amplification optical fiber 61 to efficiently enter the inner cladding of the second amplification optical fiber 62, the outer diameter of the inner cladding of the second amplification optical fiber 62 is preferably larger than the outer diameter of the inner cladding 612 of the first amplification optical fiber 61. Further, the length of the first amplification optical fiber 61 and the length of the second amplification optical fiber 62 may differ from each other.

As described above, according to the present invention, a fiber laser device capable of preventing the occurrence of stimulated Raman scattering and photo darkening, and preventing a decrease in output power is provided, and is expected to be used in a laser device for processing or the like.

## Claims

1. A fiber laser device comprising:
a first amplification optical fiber including a core to which an active element is added, and a cladding;
a first mirror that is optically coupled to the core of the first amplification optical fiber on one side of the first amplification optical fiber, and reflects light of a wavelength of at least part of light emitted from the active element that is pumped;
a second mirror that is optically coupled to the core of the first amplification optical fiber on another side of the first amplification optical fiber, and reflects light of a wavelength of at least part of light reflected by the first mirror with a lower reflectance than the first mirror;
a second amplification optical fiber that is disposed on an opposite side of the second mirror from the first amplification optical fiber, and includes a core to which an active element is added and a cladding, the core being optically coupled to the second mirror, the cladding being optically coupled to the cladding of the first amplification optical fiber;
a first pumping light source that introduces pumping light into the cladding of the first amplification optical fiber from a side of the first mirror; and
a second pumping light source that introduces pumping light into the cladding of the second amplification optical fiber from an opposite side from the second mirror,
wherein
a concentration of the active element added to the core of the second amplification optical fiber is higher than a concentration of the active element added to the core of the first amplification optical fiber, and
part of the pumping light from the first pumping light source passes through the cladding of the first amplification optical fiber and propagates to the cladding of the second amplification optical fiber.

2. The fiber laser device according to claim 1, wherein
the concentration of the active element added to the core of the second amplification optical fiber is twice or more and four times or less the concentration of the active element added to the core of the first amplification optical fiber.

3. The fiber laser device according to claim 1 or 2, wherein
the first amplification optical fiber and the second amplification optical fiber absorb 99% or more of the pumping light emitted from the first pumping light source and the second pumping light source.

4. The fiber laser device according to claim 3, wherein
the second amplification optical fiber absorbs 98% or more of the pumping light that enters the second amplification optical fiber.

5. The fiber laser device according to any one of claims 1 to 4, wherein
33% or more and 66% or less of the pumping light from the first pumping light source propagates to the second amplification optical fiber.

6. The fiber laser device according to any one of claims 1 to 5, wherein
power of the pumping light emitted from the first pumping light source is almost equal to power of the pumping light emitted from the second pumping light source.

7. The fiber laser device according to any one of claims 1 to 6, wherein
a diameter of the core of the first amplification optical fiber and a diameter of the core of the second amplification optical fiber are almost the same.
